(19) Europäisches Patentamt
European Patent Office
Office européen des brevets

(11) **EP 2 494 374 B1**

(12) **FASCICULE DE BREVET EUROPEEN**

(45) Date de publication et mention
de la délivrance du brevet:
**27.08.2014 Bulletin 2014/35**

(21) Numéro de dépôt: **10765637.3**

(22) Date de dépôt: **15.10.2010**

(51) Int Cl.:
*G01H 9/00* $^{(2006.01)}$      *G01P 3/36* $^{(2006.01)}$
*G01S 17/50* $^{(2006.01)}$     *G01S 17/88* $^{(2006.01)}$

(86) Numéro de dépôt international:
**PCT/EP2010/065515**

(87) Numéro de publication internationale:
**WO 2011/051113 (05.05.2011 Gazette 2011/18)**

(54) **PROCEDE DE DETERMINATION D'UN PARAMETRE ASSOCIE A LA VIBRATION D'UN OBJET PAR VIBROMETRIE LASER**

VERFAHREN ZUR BESTIMMUNG EINES PARAMETERS IM ZUSAMMENHANG MIT DER VIBRATION EINES OBJEKTS MITTELS LASERVIBROMETRIE

METHOD FOR DETERMINING A PARAMETER RELATED TO THE VIBRATION OF AN OBJECT BY MEANS OF LASER VIBROMETRY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2009 FR 0905225**

(43) Date de publication de la demande:
**05.09.2012 Bulletin 2012/36**

(73) Titulaire: **THALES**
**92200 Neuilly-sur-Seine (FR)**

(72) Inventeur: **PRENAT, Michel**
**F-92100 Boulogne (FR)**

(74) Mandataire: **Henriot, Marie-Pierre et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A1-96/02009      US-A1- 2005 030 520**

- **CIRPAN H A ET AL: "Deterministic Maximum likelihood Approach for Localization of Near-field Sources", AEU INTERNATIONAL JOURNAL OF ELECTRONICS AND COMMUNICATIONS, ELSEVIER, JENA, DE LNKD- DOI: 10.1078/1434-8411-54100066, vol. 56, no. 1, 1 janvier 2002 (2002-01-01), pages 1-10, XP004959841, ISSN: 1434-8411**

**Description**

Le domaine de l'invention est celui de la détermination non coopérative d'un paramètre de la vibration d'un objet, par vibrométrie laser cohérente.

On rappelle qu'un vibromètre laser comprend un dispositif d'émission d'un signal laser vers l'objet vibrant et un dispositif de détection du signal réfléchi par l'objet.

On rappelle que le vibromètre laser mesure les modulations d'amplitude et de phase appliquées au signal émis au cours de son trajet entre l'émission et la réception, c'est-à-dire d'une part pendant sa propagation (typiquement le vide ou l'air) et d'autre part pendant son interaction avec la cible. Il fonctionne sans contact et est donc particulièrement adapté pour mesurer des vibrations à la surface de matériaux liquides, sur des structures extrêmement petites telles que les MEMS acronyme de l'expression anglo-saxonne Micro Electro Mechanical Structure, ou légères telles que les membranes de haut-parleurs et ce jusqu'au GHz.

Un exemple de procédé de détermination d'un paramètre associé à la vibration paramétrique d'un objet en mouvement est décrit dans le document US 2005/030520.

Si l'objet ne présente aucun autre mouvement que la vibration et si la propagation du signal (émis et réfléchi) se fait sans déformation (déformation due par exemple à des turbulences atmosphériques), comme dans les exemples cités ci-dessus, alors, dans le cas d'une vibration périodique, le signal à traiter est un signal périodique auquel s'ajoute le bruit de réception, et la partie périodique comprend un très grand nombre d'harmoniques dès que l'amplitude de la vibration est supérieure à la longueur d'onde du laser.

Pour la détermination des paramètres de vibration de l'objet, la littérature classique, largement répandue, décrit des techniques dites de 'micro-Doppler', qui consistent à suivre au cours du temps la fréquence instantanée du signal. Mais on obtient des performances très limitées en termes de rapport signal sur bruit : le rapport signal sur bruit doit être élevé pour que ces techniques donnent des résultats satisfaisants. En effet, la mise en oeuvre de ces techniques impose que le temps d'intégration cohérente du signal soit petit devant la période de vibration. Comme celle-ci n'est pas connue a priori, le temps d'intégration cohérente doit être choisi plus petit que la plus petite période de vibration recherchée. Par exemple, si la plus grande fréquence de vibration recherchée est de 100 Hz, la plus petite période est de 10 ms, et le temps d'intégration cohérente sera limité à 1 ms. On peut trouver une description de ces méthodes dans l'article 'Coherent laser radar for vibrometry : Robust design and adaptive signal processing', de I. Renhorn et autres, SPIE 2472, pages 23-30, 1995.

L'utilisation de techniques d'estimation paramétrique ou semi-paramétrique permet d'améliorer les performances en donnant des résultats satisfaisants pour des rapports signal sur bruit sensiblement plus faibles, ce qui permet, toutes choses égales par ailleurs, d'augmenter la portée du système. La raison de cet avantage est que ces techniques, dans le cas de l'estimation semi-paramétrique que nous prendrons comme référence, travaillent par exemple à partir des signaux obtenus à la sortie d'une transformée de Fourier dont la durée d'intégration cohérente est de l'ordre de grandeur de la durée de stabilité de la vibration observée, par exemple 1 s. Ces techniques ont été étudiées en particulier au cours d'une thèse 'Estimation semi-paramétrique de la période de fonctions périodiques inconnues dans divers modèles statistiques : théorie et applications', par Céline Lévy-Leduc, Université Paris XI Orsay, soutenue le 18 novembre 2004.

Des valeurs typiques du rapport signal sur bruit nécessaire pour atteindre une performance acceptable sont 43 dB pour le micro-Doppler et 27 dB pour l'estimation semi-paramétrique, avec une durée de traitement de 1s.

On va définir le rapport signal sur bruit. Le signal à traiter est de la forme :

$$s(t)=det(t) + w(t)$$

où s, det et w sont des fonctions complexes, det est le signal 'utile', w le bruit additif de réception. Le rapport signal sur bruit RSB est le rapport entre la puissance moyenne du signal utile et la puissance du bruit additif dans une bande de fréquence égale à 1 Hz :

$$RSB = P_{det} / P_w$$

avec $P_{det}=E(|det|^2)$ exprimé en Watts, $P_w = N_0$ exprimé en Watts, $N_0$ est la densité spectrale du bruit additif, classiquement exprimée en W / Hz (Watts par Hertz).

La théorie de la mécanique quantique (voir par exemple le livre d'Albert V. Jelalian, Laser Radar Systems, chez Artech House, page 12, 'Noise Power Spectral Density') indique que, pour un amplificateur idéal, et dans les longueurs d'onde de l'optique, $N_0 = h f$ où h est la constante de Planck (h = 6,626 $10^{-34}$ J.s) et f est la fréquence porteuse du laser. Pour une longueur d'onde de 1,5 $\mu$m, on a f= 2.10$^{14}$ Hz, et hf = 1,33 10$^{-19}$ W/Hz. Le terme w étant complexe comme indiqué dans la suite, la puissance du bruit $P_w$ se répartit de façon égale et indépendante sur ses deux composantes.

Le rapport signal sur bruit exprimé en décibels, ou dB, est :

$$RSB_{dB} = 10 \log_{10} RSB.$$

Ainsi $RSB_{dB}$ = 0 dB correspond à un RSB de 1.

Cette façon de définir le rapport signal sur bruit présente l'avantage de ne dépendre ni des performances du récepteur (supposé ici idéal), ni de la période de l'échantillonnage nécessaire pour numériser le signal en vue de son traitement, ni du traitement lui-même. C'est donc une référence claire pour comparer les performances de divers procédés. On pourrait bien sûr choisir une autre définition, par exemple en prenant une bande de fréquence du bruit fixée à une autre valeur que 1 Hz.

On considère à présent un objet vibrant tel qu'un aéronef soumis en outre à d'autres mouvements tels que des mouvements de défilement et/ou de rotation ; de plus des perturbations atmosphériques sont présentes entre l'aéronef et le vibromètre. On a typiquement les ordres de grandeur suivants :

- les fréquences de vibration sont de quelques dizaines de Hz,
- la turbulence atmosphérique est un processus aléatoire spatio-temporel dont la bande de fréquence (temporelle) peut atteindre un à plusieurs kHz, la présence de la turbulence sur le trajet du laser induit sur le signal laser une modulation qui a des caractéristiques comparables,
- les mouvements de la cible conduisent à une modulation du signal assimilable à la modulation par un bruit dont la bande de fréquence peut dépasser les 100 kHz : c'est ce que l'on obtient avec une longueur d'onde du laser de 1.5 $\mu$, une cible de taille 1 m (ou plus grande, mais dont la partie illuminée par le laser a une taille de 1 m), présentant une vitesse de rotation de 0.1 m/s, typique d'un mouvement de lacet, qui voit ses points extrêmes affectés d'une différence de vitesse de 0.1 m/s, soit un écart de fréquence Doppler de 133 kHz.

Ainsi le signal utile n'est plus une fonction périodique, mais un processus aléatoire, et les performances atteignables sont nécessairement moins bonnes que dans le cas où la cible ne présente pas de mouvements autres que la vibration et où l'effet des perturbations atmosphériques est négligeable.

Le problème auquel on s'intéresse ici est de retrouver la fréquence de vibration dans ces conditions et pour un rapport signal sur bruit (additif) le plus faible possible, typiquement inférieur à 35 dB (ou décibels), afin de maximiser la distance de fonctionnement ou de minimiser la puissance à émettre.

Le signal utile étant maintenant le produit d'un signal périodique par un bruit, il est cyclostationnaire : c'est un processus aléatoire dont les propriétés statistiques varient périodiquement. On peut trouver de nombreuses informations sur les signaux cyclostationnaires et leurs traitements dans 'Cyclostationarity in Communications and Signal Processing', de William A. Gardner, IEEE Press, 1994. Sur ce type de signaux, les techniques décrites précédemment (micro-Doppler et estimation semi-paramétrique) sont inopérantes, car elles reposent sur des hypothèses qui ne sont plus vraies :

- le micro-Doppler fait l'hypothèse que la phase du signal utile est approximativement linéaire pendant le temps d'intégration cohérente (par exemple 1 ms),
- l'estimation semi-paramétrique fait l'hypothèse que le spectre du signal utile est constitué de 'pics' aux fréquences multiples de la fréquence de vibration.

On peut alors envisager d'utiliser des techniques dérivées des techniques classiques de traitement des signaux cyclostationnaires pour déterminer la fréquence de vibration de cet objet.

Ces techniques consistent à travailler en deux phases successives :

- appliquer au signal une transformation non linéaire pour obtenir un nouveau signal dont la transformée de Fourier présente des pics aux fréquences multiples de la fréquence de vibration,
- appliquer à ce nouveau signal un traitement habituel de détermination de la période inconnue d'une fonction périodique (par exemple micro-Doppler ou estimation semi-paramétrique).

On peut trouver un exemple de ces techniques dans la thèse déjà citée : 'Estimation semi-paramétrique de la période de fonctions périodiques inconnues dans divers modèles statistiques : théorie et applications', par Céline Lévy-Leduc, Université Paris XI Orsay, soutenue le 18 novembre 2004, dans l'annexe B. Le rapport signal sur bruit nécessaire est typiquement de 44 dB, pour un traitement déjà performant. L'invention décrite ici permet d'atteindre de meilleures performances.

Plus précisément l'invention a pour objet un procédé de détermination d'un paramètre P associé à la vibration paramétrique d'un objet présentant une rugosité non nulle, au moyen d'un dispositif d'émission d'un signal laser vers l'objet, et d'un dispositif de réception du signal réfléchi par l'objet, qui comprend les étapes suivantes :

- éclairer l'objet par un signal continu ou quasi-continu émis par ledit dispositif d'émission, un signal quasi-continu étant un signal obtenu par une modulation d'amplitude en 'tout ou rien' d'un signal continu,
- démoduler le signal reçu au moyen du signal émis et d'un signal en quadrature avec ce signal émis, au moyen du dispositif de réception.

Il est principalement caractérisé en ce que l'objet est en mouvement, et/ou en ce que des perturbations atmosphériques sont sur le trajet du signal émis et/ou du signal réfléchi, le signal reçu comportant alors une composante de bruit multiplicatif généré par ces perturbations atmosphériques et/ou par le mouvement de l'objet, ce bruit multiplicatif dépendant d'un paramètre b de largeur de son spectre et d'un paramètre B de normalisation du bruit multiplicatif, le paramètre P étant un des paramètres de l'ensemble $\theta_v$ qui comprend les paramètres de la vibration paramétrique, ainsi que b et B, et en ce qu'il comprend en outre les étapes suivantes :

- déterminer des intervalles pour chacun des paramètres de l'ensemble $\theta_v$,
- calculer l'ensemble $\theta_v$ des paramètres qui a la plus grande vraisemblance en fonction du signal fourni par le dispositif de réception s(t) échantillonné à des instants $t_1$, ...$t_n$, les paramètres étant pris dans leurs intervalles respectifs,
- extraire le paramètre recherché P de cet ensemble.

L'intervalle pour b comprend éventuellement la valeur 0.

Les paramètres de la vibration paramétrique sont par exemple sa fréquence, son amplitude et sa phase ; cette vibration peut être sinusoïdale.

Selon une caractéristique de l'invention, le calcul de l'ensemble $\theta_v$ qui a la plus grande vraisemblance est basé sur un calcul de la somme des résidus ou sur un calcul de vraisemblance.

Selon une autre caractéristique de l'invention, le calcul de l'ensemble $\theta_v$ qui a la plus grande vraisemblance comprend une étape de filtrage linéaire, de préférence un filtrage de Kalman.

De préférence, la rugosité a une longueur de corrélation inférieure à un dixième de la taille de la partie illuminée de l'objet.

L'étape de détermination de l'intervalle de B peut comprendre une étape préalable d'estimation de B, l'intervalle de B étant alors réduit à la valeur estimée.

Selon une caractéristique de l'invention, la fréquence Doppler $f_d$ de l'objet est un paramètre supplémentaire de l'ensemble $\theta_v$.

L'invention a pour objet un procédé de détermination d'un paramètre P associé à la vibration paramétrique d'un objet ; ce procédé comprend une étape de détermination du paramètre P selon le procédé tel que décrit, une étape d'estimation paramétrique du paramètre P d'un objet n'ayant pas d'autre mouvement qu'une vibration paramétrique et une étape de comparaison des résultats obtenus selon ces deux étapes.

L'invention a aussi pour objet un système de détermination d'un paramètre P associé à la vibration paramétrique d'un objet qui comprend un dispositif d'émission d'un signal laser vers l'objet, un dispositif de réception du signal réfléchi par l'objet, une unité de traitement du signal fourni par le dispositif de réception, aptes à mettre en oeuvre le procédé tel que décrit.

D'autres caractéristiques et avantages de l'invention apparaîtront à la lecture de la description détaillée qui suit, faite à titre d'exemple non limitatif et en référence aux dessins annexés dans lesquels :

　　la figure 1 représente schématiquement un exemple d'architecture d'un vibromètre laser cohérent selon l'invention,
　　la figure 2 représente schématiquement un signal laser incident sur un objet à une dimension soumis à un mouvement de rotation,
　　la figure 3 représente schématiquement les principales étapes pour déterminer le jeu de paramètres recherché,
　　la figure 4 représente schématiquement un exemple de mise en oeuvre de l'étape de calcul de vraisemblance.

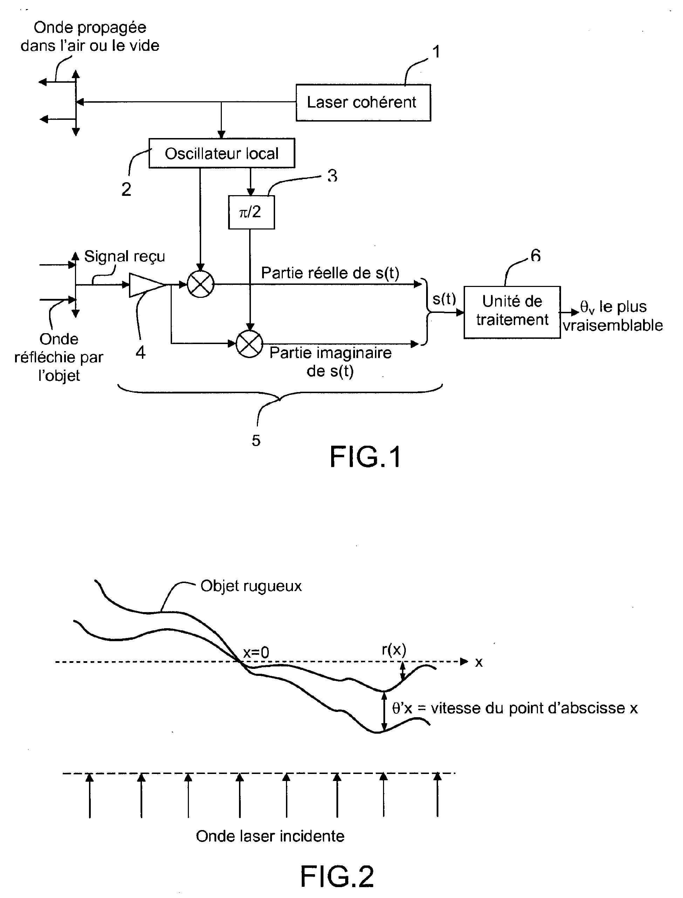

La figure 1 montre un vibromètre laser cohérent. Le caractère hétérodyne de la détection n'est pas schématisé, car il n'apporte rien à l'aspect fonctionnel de ce schéma. C'est un exemple auquel on peut apporter des variantes, par exemple :

- l'optique d'émission et l'optique de réception ne sont pas nécessairement séparées,

- la présence d'un amplificateur optique 4 est une option, son objectif étant d'augmenter le rapport signal sur bruit,

On cherche à déterminer la fréquence de vibration d'un objet ou plus généralement un des paramètres de cette vibration :

- en éclairant l'objet au moyen d'un laser 1 continu ou quasi-continu,
- et en analysant le signal réfléchi par l'objet, reçu par le vibromètre au moyen d'une détection hétérodyne cohérente assurée par le dispositif de réception 5.

On rappelle que pour obtenir une détection hétérodyne cohérente, il faut que le laser soit cohérent. Cela signifie que ses caractéristiques, et en particulier sa phase, sont suffisamment bien maîtrisées pour qu'on puisse les retrouver sans erreur significative (par exemple l'erreur de phase est inférieure à un dixième de $2\,\pi$), après une réception qui restitue les caractéristiques d'amplitude et de phase de la modulation appliquée au signal entre l'instant d'émission et l'instant de réception, c'est-à-dire en démodulant le signal reçu en parallèle au moyen d'une fraction du signal émis éventuellement décalé en fréquence et/ou en temps (ce signal est appelé oscillateur local 2) et d'un signal en quadrature 3 avec l'oscillateur local, et en ramenant ensuite ces signaux autour de la fréquence nulle dans le cas où les oscillateurs locaux sont décalés en fréquence par rapport au signal émis (cas général de la détection hétérodyne).

Sur une cible ponctuelle, et si le vibromètre est monostatique, c'est-à-dire que les centres de phase à l'émission et à la réception sont confondus, le signal s(t) après démodulation en phase et en quadrature est un signal complexe de la forme :

$$s(t) = \alpha . e^{\,j\frac{4\pi}{\lambda}d(t)} + w(t)$$

d(t) étant la distance entre la cible et le vibromètre, $\lambda$ la longueur d'onde du signal laser émis, $\alpha$ l'amplitude du signal reçu, w(t) le bruit de réception aussi désigné bruit additif ; w(t) est de la forme :

$w(t) = w_I(t) + j\,w_Q(t)$, I pour « en phase » et Q pour « en quadrature ».

Si la cible n'est pas ponctuelle, si elle est sous la forme par exemple d'un 'continuum' selon une direction Ox, on a :

$$s(t) = \int_{x} \alpha(x)\, e^{j\frac{4\pi}{\lambda}d(x,t)} dx + w(t)$$

$\alpha(x)$ étant une fonction réelle représentative des phénomènes de propagation et de réflexion au point d'abscisse x ; s(t) s'écrit aussi sous la forme : s(t) = det(t)+w(t)

Cette formule se généralise de façon évidente au cas (réel) d'un objet dans l'espace, auquel cas le signal laser rencontre une surface et non une ligne. Toute la suite de l'exposé reste vraie dans cette hypothèse, en particulier la liste des paramètres à estimer.

Pour une cible non ponctuelle non vibrante mais soumise à un mouvement de rotation comme illustré figure 2, le signal à traiter hors bruit additif, aussi désigné signal 'utile', det(t) est, à un terme global de phase près qui n'a pas de conséquence pour la suite, de la forme :

$$\det(t) = \int_{x} \alpha(x) e^{j\Phi(x)} e^{j\gamma x t} dx$$

$\Phi(x)$ étant lié à la rugosité r(x) de l'objet par la formule $\Phi(x) = (4\,\pi/\lambda) . r(x)$, et $\gamma = (4\,\pi/\lambda)\, d\theta/dt$, $\theta$ étant l'angle de rotation.

Cette formule fait l'approximation justifiée que, pendant le temps d'analyse du signal auquel on va s'intéresser, la rotation de l'objet est assimilable pour chaque point à une translation à vitesse constante, la vitesse radiale correspondante étant proportionnelle à la distance entre le point considéré et le centre de rotation instantané de l'objet. Ici le centre de rotation de l'objet est supposé se situer au point d'abscisse x = 0.

On considère à présent une cible non ponctuelle en rotation et soumise à une vibration sinusoïdale. Par vibration sinusoïdale, on entend une vibration dont le spectre est théoriquement constitué de deux pics de Dirac, mais également une vibration dont le spectre présente dans les fréquences positives, un seul 'mode' étroit c'est-à-dire dont la largeur est inférieure par exemple au dixième de son abscisse. Pour la vibration, on ne s'intéresse qu'aux fréquences positives, car la vibration est un phénomène réel, dont le spectre est pair.

Pour une telle cible, le signal à traiter hors bruit additif det(t) est de la forme :

$$det(t) = \int_x \alpha(x) \, e^{j\frac{4\pi}{\lambda}r(x)} e^{j\gamma xt} e^{j\frac{4\pi}{\lambda}a_r(x)\cos(2\pi f_v t + \phi_v)} dx$$

(4 π/λ). r(x) étant représentatif de la rugosité de la cible, avec un écart-type de r(x)>0,

γ.x.t étant représentatif du mouvement de rotation de la cible,

$a_v(x) \cos(2\pi f_v t + \Phi_v)$ étant représentatif de la vibration de la cible, $a_v$, $f_v$ et $\Phi_v$ étant respectivement l'amplitude, la fréquence et la phase de la vibration, soit les paramètres définissant cette vibration.

L'écart-type de la rugosité r(x) est de préférence supérieur à λ/5, λ étant la longueur d'onde du signal émis. En outre, la rugosité de l'objet présente avantageusement une longueur de corrélation petite devant la taille de la partie illuminée de l'objet, condition qui dans la pratique est toujours satisfaite. La longueur de corrélation est définie de la façon suivante : la rugosité est modélisée comme un processus aléatoire stationnaire, dont on peut classiquement définir la fonction de corrélation, qui est une fonction de l'écart entre deux points, et qui vaut 1 pour un écart nul. La longueur de corrélation est alors définie comme l'écart pour lequel la corrélation a une valeur donnée, par exemple 1/e, où e est l'exponentielle de 1. La longueur de corrélation est dite petite devant la taille de la partie illuminée de l'objet si elle est par exemple inférieure à un dixième de cette taille.

Un défilement de la cible, c'est-à-dire une translation selon une direction différente de celle de la droite vibromètre-cible, dite ligne de visée, se traduit par une rotation apparente (c'est-à-dire vue du vibromètre) à laquelle s'ajoute une translation d'ensemble. Dans ce cas, la partie radiale (c'est-à-dire selon l'axe entre le vibromètre et l'objet) de cette translation conduit à un décalage supplémentaire en fréquence (effet Doppler).

La vibration étant supposée être la même pour tous les points de l'objet, le signal det(t) s'écrit aussi sous la forme :

$$\det(t) = e^{j\frac{4\pi}{\lambda}a_v \cos(2\pi f_v t + \phi_v)} \int_x \alpha(x) e^{j\frac{4\pi}{\lambda}r(x)} e^{j\gamma xt} dx$$

$$= B e^{j\frac{4\pi}{\lambda}a_v \cos(2\pi f_v t + \phi_v)} R(t)$$

Ce signal comporte une composante de bruit multiplicatif R(t) généré par les perturbations atmosphériques et/ou par le mouvement de l'objet. La notation adoptée dans la formule précédente permet, grâce au terme de normalisation B, de supposer que le bruit multiplicatif est normalisé, c'est-à-dire que sa puissance (constante car le processus est stationnaire, voir ci-dessous) est égale à 1. Les caractéristiques statistiques du processus aléatoire asymptotiquement gaussien multiplicatif (voir ci-dessous) se déduisent de celles du phénomène 'parasite' : par exemple, si la cible présente un mouvement de rotation et a une surface homogène, la densité spectrale de ce processus est une fonction de la fréquence qui a la même forme que la loi d'éclairement du laser au niveau de la cible (fonction de x) (cette forme est en général gaussienne), et dans ce cas les caractéristiques statistiques de R ne dépendent que d'un paramètre b qui est la largeur de son spectre, par exemple la largeur à mi-hauteur de ce spectre, qui dépend de la vitesse de rotation et de la taille de la partie illuminée de la cible. On considère ainsi que ces paramètres b et B sont aussi associés à la vibration dans le signal reçu.

La demanderesse a démontré que R(t) est quasi-gaussien et quasi-stationnaire lorsque la rugosité de l'objet est 'suffisante' : la rugosité étant considérée comme une réalisation d'un processus aléatoire stationnaire défini par son écart-type et sa fonction de corrélation spatiale, 'suffisante' signifie que son écart-type n'est pas trop petit devant la longueur d'onde du laser, par exemple l'écart-type est supérieur à au moins un cinquième de la longueur d'onde et sa longueur de corrélation est petite (comme indiqué précédemment) devant la taille de la partie illuminée de la cible. Les conditions énoncées ci-dessus sont très peu restrictives et dans la pratique toujours satisfaites, ce qui justifie l'hypothèse de caractère gaussien et stationnaire pour R(t), qui est une des hypothèses sur lesquelles repose la procédure objet de l'invention. Dans ce cas, le signal det(t) est donc le produit d'un signal périodique à grand nombre d'harmoniques (comme indiqué en préambule) généré par la vibration de l'objet, par un processus R(t) aléatoire stationnaire complexe gaussien dont la bande de fréquence est beaucoup plus grande (par exemple 10 fois plus grande) que la fréquence de vibration. Il est cyclostationnaire d'ordre 2.

Le raisonnement s'applique également lorsque la cible est soumise à un mouvement de défilement en plus ou à la place du mouvement de rotation.

La demanderesse montre ainsi que si une cible rugueuse présente en plus de la vibration un mouvement complémentaire de défilement et/ou de rotation, même très petit, ou si l'onde propagée est déformée par exemple par des turbulences atmosphériques qui se traduisent par une modulation spatio-temporelle de l'onde laser, alors le signal périodique est multiplié par un bruit multiplicatif R(t) qui est un processus aléatoire stationnaire complexe gaussien. Le signal à traiter det(t) est alors un processus aléatoire cyclostationnaire, auquel s'ajoute le bruit de réception.

Le signal à traiter s(t) est donc la somme de deux signaux :

- le premier signal det(t) est le produit d'un signal périodique par un processus aléatoire stationnaire gaussien, éventuellement décalé en fréquence par l'effet Doppler décrit précédemment,
- le deuxième signal est le bruit de réception.

On rappelle que le problème posé est celui de la détermination d'un ou des paramètres associés à la vibration (par exemple $f_v$ et éventuellement $a_v$) avec les meilleures performances possibles en présence du bruit additif.

On distingue deux classes de paramètres pour le signal à traiter :

- les paramètres 'utiles' ou intéressants tels que la fréquence de vibration $f_v$, éventuellement son amplitude $a_v$,
- les paramètres 'nuisibles', qui n'apportent pas d'information intéressante sur la vibration tels que la phase de la vibration $\Phi_v$, et les caractéristiques statistiques du bruit multiplicatif provoqué par la rotation et les perturbations atmosphériques.

On désigne par $\theta_v$ le jeu (ou l'ensemble) de paramètres $f_v$, $a_v$, $\Phi_v$, B, et b, ce dernier étant représentatif du bruit multiplicatif. On peut noter que b peut être nul.

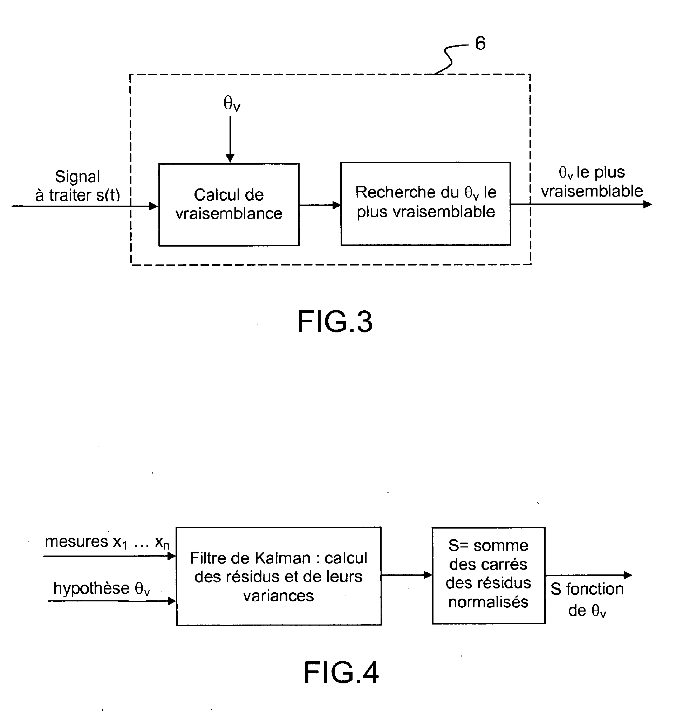

En effet, le procédé décrit permet d'estimer au moyen de l'unité de traitement 6 montrée figures 1 et 3, les paramètres de la vibration lorsque l'objet est en rotation. Pour cela, il introduit un paramètre b qui caractérise la rotation.

Si l'objet n'est pas en rotation, on se trouve dans le cadre du signal périodique décrit en préambule. Bien que le traitement décrit dans cette demande ne soit pas optimum dans ce cas puisqu'il ajoute inutilement un paramètre supplémentaire à estimer, son fonctionnement est cependant assuré, si l'on a pris la précaution de mettre la valeur 0 dans les valeurs possibles de b (l'intervalle pour b est déterminé à partir de 0).

Généralement, on ne sait pas si l'objet est en rotation ou non. La façon d'aboutir à un résultat optimal dans tous les cas consiste à réaliser en parallèle le traitement décrit ici, et un traitement tel que décrit dans le préambule qui suppose que la rotation est nulle, et à comparer les résultats des deux traitements grâce à la somme des carrés des résidus obtenue. L'optimum sera atteint en choisissant le traitement dont le résultat est le meilleur.

On n'a pas inclus dans ce jeu de paramètres $\theta_v$ la fréquence Doppler $f_d$ éventuellement induite par la translation de l'objet. Cet effet Doppler pourra être traité soit par le procédé objet de l'invention, c'est-à-dire en ajoutant le paramètre $f_d$ au jeu de paramètres $\theta_v$, soit si possible en prenant en compte des informations supplémentaires, par exemple une mesure par un radar de la vitesse radiale, ou encore en appliquant des techniques de détection qui ne sont pas l'objet de cette invention.

De façon nouvelle, on utilise par la suite le fait que, dès lors que le signal det(t) est le produit d'un signal connu par un processus stationnaire, on peut le représenter par un modèle d'état linéaire à coefficients non constants, ces coefficients dépendant des valeurs successives du signal connu. Dans le cas présent où le signal est inconnu mais paramétrique, c'est-à-dire où ses valeurs successives dépendent de façon connue d'un nombre fini de paramètres inconnus, alors les coefficients variables du modèle d'état dépendent de ces paramètres (utiles et nuisibles).

On rappelle qu'un modèle d'état est défini par une équation d'observation et une équation d'état.

Le procédé selon l'invention est fondé sur :

- une représentation du signal à traiter det(t) par un modèle paramétrique, car premièrement les caractéristiques du signal périodique se déduisent de celles de la vibration, et ses paramètres sont, pour une vibration sinusoïdale : fréquence, amplitude, phase, deuxièmement les caractéristiques de la partie multiplicative de det(t) se déduisent de celles du phénomène perturbateur, rotation de la cible et/ou turbulences atmosphériques, et son seul paramètre est, pour une cible homogène en rotation et avec un éclairement gaussien, la largeur b de sa densité spectrale de puissance de R(t), et troisièmement la puissance totale du signal det(t) est caractérisée par le paramètre B,
- une estimation globale de la totalité des paramètres, dont en particulier les paramètres intéressants de la vibration, par une estimation paramétrique dont le principe consiste à trouver les valeurs de paramètres les plus vraisemblables compte tenu de l'observation sur une certaine durée de s(t).

Un exemple de réalisation de cette estimation paramétrique, détaillé ci-après, est basé sur une représentation par modèle d'état du signal s(t). Le modèle d'état est ici linéaire, c'est-à-dire que l'équation d'état et l'équation de mesure sont linéaires, et à coefficients variables avec le temps.

La représentation par modèle d'état est possible car le phénomène observé correspond à un 'système dynamique'. En effet la valeur qu'il prend à un instant donné dépend de ses valeurs précédentes, ce qui est 'physiquement' dû à la conjonction de deux effets :

1) le profil de rugosité est une réalisation d'un processus aléatoire (réalisation qui par définition est fixée pour toute la durée de l'observation),
2) les divers mouvements considérés (vibration, rotation, défilement) sont eux-mêmes des systèmes dynamiques. Il en est évidemment de même des perturbations atmosphériques.

Le modèle d'état permet de mettre en oeuvre une prédiction du signal notamment par filtrage de Kalman, pour chaque jeu $\theta_v$ de paramètres possibles.

Finalement dès lors que le signal det(t) est le produit d'un signal paramétrique (en particulier sinusoïdal) par un processus stationnaire dont les caractéristiques statistiques sont elles-mêmes paramétriques, on peut déterminer le jeu $\theta_v$ de paramètres recherché.

On a décrit ici une façon optimale d'estimer les paramètres ; par optimale, on entend qu'elle conduit à l'estimation dont l'erreur présente la plus petite matrice de covariance. Certains paramètres peuvent cependant être estimés séparément, ce qui simplifie le calcul mais est sous-optimal du point de vue des performances ; c'est le cas par exemple du Doppler général $f_d$ déjà évoqué, c'est le cas également de B dont le carré est la puissance moyenne du signal, puisque par convention R(t) est de puissance unité ; cette puissance peut être estimée de façon classique car la puissance du bruit w(t) est connue. On voit clairement où se situe ici le caractère sous-optimal de cette façon de procéder, car la méthode d'estimation séparée de B nécessite pour être optimale que la bande de fréquence du processus det(t) soit connue, ce qui n'est pas le cas en général, car il faudrait connaître les quantités qui la déterminent, à savoir la vitesse de rotation apparente de l'objet et la taille de la tache laser sur la cible. Cette taille peut être connue si l'on connaît la distance du vibromètre à la cible et la divergence du laser, mais la vitesse de rotation apparente est généralement inconnue.

Ce procédé s'applique au cas où plusieurs modes de vibration sont présents simultanément, au même endroit ou en plusieurs endroits de la cible.

Le modèle d'état est défini de la façon suivante :

$x_t$ représente le signal s(t) échantillonné à des instants discrets $t_1, ..., t_n$.

En utilisant le fait que $R_t$ peut être modélisé de façon approchée par un processus autorégressif d'ordre 1, on obtient les deux équations complexes suivantes :

$$x_t = f_t R_t + w_t$$

$$R_t = \phi R_{t-1} + z_t$$

$w_t$ étant le bruit additif de réception, bruit blanc complexe dont les deux composantes sont indépendantes entre elles,
$z_t$ est un bruit blanc complexe dont les deux composantes sont indépendantes entre elles,
$\Phi$ dépendant du paramètre b du bruit multiplicatif et de la période d'échantillonnage $t_e = t_{i+1} - t_i$ qui est indépendante de i dans l'hypothèse, non restrictive, où les instants $t_1, ..., t_n$ sont régulièrement espacés.

Si b est pris comme largeur à mi-hauteur du spectre du bruit multiplicatif, $\Phi$ et b sont liés par la formule : $b = [1/(\pi t_e)]$ arc cos $[(-1-\Phi^2+4\Phi) / (2\Phi)]$ valable pour $\Phi$ compris entre $3 - 8^{1/2} = 0.17$ et 1. En général, $\Phi$ est proche de 1 par valeurs négatives, b est petit devant $1/t_e$ et b est approximativement égal à $(1-\Phi) / (\pi t_e)$.

On rappelle que R(t) a une puissance égale à 1.

Pour une vibration sinusoïdale :

$$f_t = B \ e^{j(4\pi / \lambda)a_v \cos(2\pi f_v t + \Phi_v)}.$$

$a_v$, $f_v$, $\Phi_v$ étant respectivement l'amplitude, la fréquence et la phase de la vibration.

On en déduit pour x(t) le modèle d'état suivant :

$x_t = u_t + w_t$ , cette équation étant l'équation d'observation,

$u_t = \Phi_t u_{t-1} + f_t . z_t$ , cette équation étant l'équation d'état.

Avec $\Phi_t = \Phi \, f_t/f_{t-1}$.

Ce modèle peut être généralisé pour prendre en compte plus précisément la forme de la densité spectrale de R, celle-ci étant généralement gaussienne à cause de la forme du faisceau laser, alors que la densité spectrale d'un processus auto-régressif d'ordre 1 n'est qu'approximativement gaussienne. Il est connu (voir par exemple 'Time Series: Theory and Methods', de Richard A. Brockwell et Peter J. Davis, Springer Series in Statistics, Springer, 1991, introduction au chapitre 3 sur les processus ARMA) que l'on peut approcher autant que l'on veut la densité spectrale d'un processus stationnaire par celle d'un processus ARMA acronyme de l'expression anglo-saxonne Auto-regressive Moving Average. Cette généralisation conduit à un modèle d'état dont la partie équation d'état est vectorielle, le coefficient $\phi$ étant remplacé par une matrice et le terme $f_t$ dans l'équation d'état étant remplacé par un vecteur dont tous les termes sont nuls, sauf l'un d'eux qui est égal à $f_t$.

Ce modèle étant établi, on sait alors que le jeu $\theta_v$ de paramètres les plus vraisemblables compte tenu des observations $x_t$ pour $t = t_1$ à $t_n$, peut être déterminé. Il est déterminé selon les étapes indiquées figure 3.

L'étape de calcul de la vraisemblance pour un jeu donné $\theta_v$ de paramètres peut être obtenue par le calcul de la somme S des carrés des résidus pour ce jeu de paramètres et est illustrée figure 4. Ce calcul est réitéré pour chaque nouveau jeu de paramètres obtenu en faisant varier les valeurs des paramètres dans des intervalles déterminés a priori. Une alternative au calcul des résidus décrit ci-dessous est le calcul direct de la vraisemblance, selon la formule $p(\theta_v = \Theta_v \mid x_1, ..., x_n)$ qui est la probabilité pour que le jeu de paramètres $\theta_v$ prenne la valeur $\Theta_v$ conditionnellement aux observations $x_1, ..., x_n$ . Des techniques existent, mais il n'est pas toujours possible d'aboutir à un calcul effectif de la vraisemblance via ces techniques. On peut décrire succinctement l'exemple suivant : soit une suite d'observations d'une fonction $f_t$ avec un bruit corrélé gaussien $w_t$ de matrice de covariance C, alors la densité de probabilité est donnée par la classique densité normale multidimensionnelle, de moyenne $f_t$ et de covariance C.

La somme des carrés des résidus S est obtenue par exemple selon les étapes suivantes, qui font appel à un filtrage de Kalman, à partir du signal démodulé s(t) échantillonné à des instants $t_1, ...t_n$ et prenant à ces instants les valeurs $x_1, ..., x_n$ :

- prédire (étape de prédiction dans le filtrage de Kalman), la valeur de l'état $u_t$ en fonction des signaux $x_t$ aux instants $t_1, ..., t_{t-1}$ précédents, et du jeu de paramètres donné $\theta_v$, et calculer la variance de l'erreur de prédiction,
- prédire la valeur de la mesure $x_t$ et calculer la variance de l'erreur de cette prédiction,
- à partir de la mesure $x_t$ et de sa valeur prédite, calculer $v_t$ qui est l'innovation ou erreur de prédiction de $x_t$ ,ainsi que la variance de cette erreur.
- estimer la valeur de l'état $u_t$ en fonction des signaux $x_t$ aux instants $t_1, ..., t_t$, ainsi que la variance de l'erreur d'estimation.
- répéter ces étapes pour les n-1 signaux de $t_2$ à $t_n$, pour obtenir n-1 résidus, auxquels on peut éventuellement ajouter un résidu à $t_1$ en prenant pour la valeur prédite une valeur a priori,
- calculer la somme S des carrés des résidus obtenus normalisés, le carré d'un résidu étant ici le carré de son module puisque le résidu est un nombre complexe, et le carré normalisé étant égal au carré du résidu divisé par sa variance.

Des alternatives au filtrage de Kalman sont possibles par les techniques de filtrage linéaire optimal, décrites par exemple dans 'Traitement du Signal concepts et applications', de Patrick Duvaut, Traité des Nouvelles Technologies, Série Traitement du Signal, chez Hermes, 1991 (filtre de Volterra, filtre de Wiener), mais le filtrage de Kalman est préféré quand sa mise en oeuvre est possible, grâce à sa concision.

La somme S des carrés des résidus varie en raison inverse de la vraisemblance. En effet, le bruit additif étant gaussien et blanc, les résidus calculés par la méthode décrite présentent les mêmes propriétés, et dans ce cas il est connu que le logarithme de la vraisemblance, qui est lui-même une fonction croissante de la vraisemblance, est égal à un facteur multiplicatif négatif près à la somme des carrés des résidus. Le jeu $\theta_v$ de paramètres recherché est alors celui qui minimise la somme S. On obtient alors non seulement la fréquence $f_v$ recherchée mais aussi l'amplitude $a_v$, la phase de la vibration $\Phi_v$, ainsi d'ailleurs que les paramètres B de puissance du signal det(t) et b du bruit multiplicatif.

On va à présent détailler les formules du filtrage de Kalman en reprenant les étapes décrites ci-dessus. La quantité à estimer est $u_t$. Les notations adoptées sont les suivantes :

$$\hat{u}_{t|t} = E\,(u_t \mid x_1 ... x_t) \qquad Var(\hat{u}_{t|t}) = C_{t|t}$$

(suite)

$$\hat{u}_{t|t-1} = E(u_t | x_1...x_{t-1}) \qquad Var(\hat{u}_{t|t-1}) = C_{t|t-1}$$

$v_t = x_t - \hat{u}_{t|t-1}$, $v_t$ étant l'innovation au sens de la théorie du filtre de Kalman, $Var(v_t) = V_t$

Par ailleurs après la première observation $x_1$, on a

$\hat{u}_{1|1} = x_1$ avec $C_{1|1} = I_2$, $I_2$ étant la matrice d'identité d'ordre 2.

Les équations de Kalman sont :

Initialisation à partir de la première mesure $x_1$ :

$$\hat{u}_{1|1} = x_1 \text{ avec } C_{1|1} = I_2$$

Equations récursives pour t = 2, ...,n :

$$\hat{u}_{t|t-1} = \phi_t \hat{u}_{t-1|t-1} = \phi e^{j\delta\theta_t} \hat{u}_{t-1|t-1}$$

avec $\delta\theta_t = \theta_t - \theta_{t-1}$ et $\theta_t = (4\pi/\lambda) a_v \cos(2\delta\pi f_v t + \phi_v)$

$$C_{t|t-1} = \phi^2 C_{t-1|t-1} + B^2(1-\phi^2)I_2$$

$$v_t = x_t - \hat{u}_{t|t-1} ,$$

$v_t$ étant l'erreur de prédiction ou innovation

$$V_t = C_{t|t-1} + I_2$$

$$K_t = C_{t|t-1} V_t^{-1}$$

$$\hat{u}_{t|t} = \hat{u}_{t|t-1} + K_t v_t$$

$$C_{t|t} = C_{t|t-1} - K_t V_t K'_t$$

On remarque que, comme l'état et la mesure sont des vecteurs de dimension 2 puisque l'équation d'état et l'équation d'observation portent sur des nombres complexes, toutes les matrices de covariance $C_{t|t-1}$, $C_{t-1|t-1}$, $V_t$, ainsi que le 'gain' $K_t$, sont des multiples de $I_2$ grâce au caractère unimodulaire de $e^{j\delta\theta}$ et des propriétés statistiques de R,w, z. Le calcul de ces matrices est alors réduit à des opérations scalaires.

Il est visible que les opérations précédentes, qui ont été détaillées dans le cas d'une vibration sinusoïdale, s'étendent au cas général d'une vibration paramétrique, dont voici deux exemples :

- une vibration en 'créneaux' périodiques, dont les paramètres sont les mêmes que pour une vibration sinusoïdale (amplitude, fréquence, phase) mais la forme est différente,
- une vibration sinusoïdale amortie, dont l'amplitude décroît au cours du temps, par exemple de façon exponentielle ; deux paramètres complémentaires sont nécessaires : l'instant de début de la vibration, la constante de temps de la décroissance exponentielle de l'amplitude.

On va à présent détailler l'opération de minimisation de la somme des résidus.

La recherche du jeu de paramètres qui minimise la somme S des carrés des résidus normalisés relève des techniques classiques d'optimisation.

Pour une fonction à valeurs réelles qui dépend d'une ou de plusieurs variables, l'optimisation consiste à trouver, à l'intérieur d'un ensemble déterminé, le jeu de variables qui minimise ou maximise la fonction. Ici la fonction à valeurs réelles est S qui dépend des paramètres décrits, et ceux-ci peuvent prendre des valeurs dans un domaine donné a priori. Le problème est celui de la minimisation de S.

Compte tenu de sa construction, la fonction S n'est pas explicite et le calcul des paramètres qui la minimisent ne peut pas être mené de façon littérale, il faut donc utiliser les méthodes classiques d'optimisation, qui ne font pas l'objet de l'invention mais sont décrites brièvement à titre d'exemples de réalisation, dans le cas de la minimisation.

La première méthode qui vient à l'esprit consiste à calculer les valeurs de la fonction S pour tous les ensembles possibles de variables et à prendre l'ensemble de variables qui conduit à la plus petite valeur de S. Cette méthode conduit à une grande quantité de calcul et se heurte au problème du choix de l'échantillonnage des variables, lié au caractère plus ou moins régulier de la fonction à minimiser.

La méthode la plus connue pour contourner ces difficultés est la technique de 'descente de gradient', qui consiste à se déplacer dans l'espace des variables selon les lignes de plus grande pente négative de la fonction, jusqu'à satisfaire un critère d'arrêt. Cette technique résout de façon très avantageuse les deux difficultés citées précédemment. La contrepartie est qu'elle peut conduire à un arrêt, donc à un choix de la solution, qui correspond à un minimum local de la fonction, et non à son minimum absolu. Ce risque existe dès que la fonction à minimiser n'est pas convexe dans l'ensemble des valeurs possibles des variables.

Pour résoudre ce dernier point, la méthode du 'recuit simulé' combine en quelque sorte les caractéristiques et les avantages des deux méthodes précédentes. L'expression 'recuit simulé' fait référence aux techniques de recuit de la métallurgie, où sont alternées des phases de refroidissement lent et des phases de réchauffage ; dans le cas de l'optimisation, les phases de refroidissement lent sont des phases de descente de gradient où l'on se rapproche, avec des variations petites des variables, d'un minimum de la fonction, et les phases de réchauffage consistent à changer de façon plus radicale les valeurs des variables, pour éviter de rester 'enfermé' dans un minimum local de la fonction. Les réglages utilisés garantissent une bonne performance, c'est-à-dire une probabilité élevée de trouver avec précision le minimum absolu de la fonction.

Dans le cadre de cette invention, la fonction S présente l'avantage d'être régulière, c'est-à-dire de varier de façon lente en fonction des variables, ce qui est un atout majeur pour l'optimisation. Notons qu'il en est ainsi car l'on travaille sur le signal complexe, il n'en serait pas du tout de même si l'on utilisait une seule des deux composantes du signal complexe.

L'estimation des paramètres est réalisée sur une période durant laquelle ces paramètres sont temporellement stationnaires. On a vu dans l'exemple du préambule que cette période est typiquement de 1 s.

Le traitement décrit prend en entrée un nombre n d'échantillons du signal. Ce nombre est choisi de façon telle que les paramètres à estimer sont constants pendant la durée du signal traité, c'est-à-dire T = n te, où te est la période d'échantillonnage. T est appelé durée de stationnarité du phénomène observé.

Par exemple, si l'on prend une durée de stationnarité égale à 1 s, et te = 100 $\mu$s, alors n = $10^4$.

Dans la réalité, les caractéristiques du phénomène observé peuvent varier au cours du temps. Il est alors envisageable de reproduire le traitement, de façon indépendante, sur des périodes successives de 1 s. Pour une meilleure prise en compte des variations du phénomène (variations lentes, variations rapides, instants de changement non connus), il est possible de faire se chevaucher ces périodes, par exemple des durées de traitement de 1 s, reproduites toutes les 500 ms.

Cet objet est typiquement un aéronef ou un véhicule terrestre voire un navire.

Ce procédé a été mis en oeuvre avec un aéronef. On obtient avec ce procédé des performances acceptables pour un rapport signal sur bruit de 35 dB avec une durée de traitement de 1 s et un laser émettant avec $\lambda$ = 1, 5 $\mu$m.

## Revendications

**1.** Procédé de détermination d'un paramètre P associé à la vibration paramétrique d'un objet présentant une rugosité non nulle, au moyen d'un dispositif d'émission d'un signal laser vers l'objet, et d'un dispositif de réception du signal réfléchi par l'objet, **caractérisé en ce qu'**il comprend les étapes suivantes :

- éclairer l'objet par un signal continu ou quasi-continu émis par ledit dispositif d'émission, un signal quasi-continu étant un signal obtenu par une modulation d'amplitude en 'tout ou rien' d'un signal continu,
- démoduler le signal reçu au moyen du signal émis et d'un signal en quadrature avec ce signal émis, au moyen du dispositif de réception,

et **en ce que** l'objet est en mouvement, et/ou **en ce que** des perturbations atmosphériques sont sur le trajet du signal émis et/ou du signal réfléchi, le signal reçu comportant alors une composante de bruit multiplicatif généré par ces perturbations atmosphériques et/ou par le mouvement de l'objet, ce bruit multiplicatif dépendant d'un paramètre b de largeur de son spectre et d'un paramètre B de normalisation du bruit multiplicatif, le paramètre P étant un des paramètres de l'ensemble $\theta_v$ qui comprend les paramètres de la vibration paramétrique, ainsi que b et B, et **en ce qu'**il comprend en outre les étapes suivantes :

- déterminer des intervalles pour chacun des paramètres de l'ensemble $\theta_v$,
- calculer l'ensemble $\theta_v$, des paramètres qui a la plus grande vraisemblance en fonction du signal fourni par le dispositif de réception s(t) échantillonné à des instants $t_1, ...t_n$, les paramètres étant pris dans leurs intervalles respectifs,
- extraire le paramètre recherché P de cet ensemble.

2. Procédé de détermination d'un paramètre P associé à la vibration paramétrique d'un objet selon la revendication 1, **caractérisé en ce que** l'intervalle pour b comprend la valeur 0.

3. Procédé de détermination d'un paramètre P associé à la vibration paramétrique d'un objet selon l'une des revendications précédentes, **caractérisé en ce que** les paramètres de la vibration paramétrique sont sa fréquence, son amplitude et sa phase.

4. Procédé de détermination d'un paramètre P associé à la vibration paramétrique d'un objet selon la revendication précédente, **caractérisé en ce que** la vibration paramétrique est sinusoïdale.

5. Procédé de détermination d'un paramètre P associé à la vibration paramétrique d'un objet selon l'une des revendications précédentes, **caractérisé en ce que** le calcul de l'ensemble $\theta_v$ qui a la plus grande vraisemblance est basé sur un calcul de la somme des carrés des résidus ou sur un calcul de vraisemblance.

6. Procédé de détermination d'un paramètre P associé à la vibration paramétrique d'un objet selon l'une des revendications précédentes, **caractérisé en ce que** le calcul de l'ensemble $\theta_v$ qui a la plus grande vraisemblance comprend une étape de filtrage linéaire.

7. Procédé de détermination d'un paramètre P associé à la vibration paramétrique d'un objet selon la revendication précédente, **caractérisé en ce que** le filtrage est un filtrage de Kalman.

8. Procédé de détermination d'un paramètre P associé à la vibration paramétrique d'un objet selon l'une des revendications précédentes, **caractérisé en ce que** la rugosité a une longueur de corrélation inférieure à un dixième de la taille de la partie illuminée de l'objet.

9. Procédé de détermination d'un paramètre P associé à la vibration paramétrique d'un objet selon l'une des revendications précédentes, **caractérisé en ce que** l'étape de détermination de l'intervalle de B comprend une étape préalable d'estimation de B, l'intervalle de B étant alors réduit à la valeur estimée.

10. Procédé de détermination d'un paramètre P associé à la vibration paramétrique d'un objet selon l'une des revendications précédentes, **caractérisé en ce que** la fréquence Doppler $f_d$ de l'objet est un paramètre supplémentaire de l'ensemble $\theta_v$.

11. Procédé de détermination d'un paramètre P associé à la vibration paramétrique d'un objet, **caractérisé en ce que** ce paramètre étant l'amplitude ou la fréquence ou la phase de la vibration paramétrique, il comprend une étape de détermination du paramètre P selon l'une des revendications précédentes prise en combinaison avec la revendication 2, une étape d'estimation paramétrique du paramètre P de l'objet en supposant que cet objet n'a pas d'autre mouvement qu'une vibration paramétrique et une étape de comparaison des résultats obtenus selon ces deux étapes.

12. Procédé de détermination d'un paramètre P associé à la vibration paramétrique d'un objet selon l'une des revendications précédentes, **caractérisé en ce que** l'objet est un aéronef ou un véhicule terrestre ou un navire.

13. Système de détermination d'un paramètre P associé à la vibration paramétrique d'un objet, **caractérisé en ce qu'**il comprend un dispositif d'émission (1) d'un signal laser vers l'objet, un dispositif de réception (5) du signal réfléchi par l'objet, une unité de traitement (6) du signal fourni par le dispositif de réception, aptes à mettre en oeuvre le procédé selon l'une des revendications précédentes.

**Patentansprüche**

1. Verfahren zum Ermitteln eines Parameters P, der mit der parametrischen Vibration eines Objekts mit einer Rauheit von ungleich null assoziiert ist, mittels einer Vorrichtung zum Senden eines Lasersignals zu dem Objekt und einer Vorrichtung zum Empfangen des von dem Objekt reflektierten Signals, **dadurch gekennzeichnet, dass** es die folgenden Schritte beinhaltet:

   - Beleuchten des Objekts mit einem von der Sendevorrichtung gesendeten kontinuierlichen oder quasikontinuierlichen Signal, wobei ein quasikontinuierliches Signal ein von einer "Alles-oder-Nichts"-Amplitudenmodulation eines kontinuierlichen Signals erhaltenes Signal ist;
   - Demodulieren, mit der Empfangsvorrichtung, des empfangenen Signals mittels des gesendeten Signals und eines zu diesem gesendeten Signal um 90° phasenverschobenen Signals,

   und dadurch, dass sich das Objekt bewegt, und/oder dadurch, dass auf der Bahn des gesendeten Signals und/oder des reflektierten Signals atmosphärische Störungen vorliegen, wobei das empfangene Signal dann eine multiplikative Rauschkomponente enthält, die durch diese atmosphärischen Störungen und/oder durch die Bewegung des Objekts erzeugt wird, wobei dieses multiplikative Rauschen von einem Breitenparameter b seines Spektrums und von einem Normalisierungsparameter B des multiplikativen Rauschens abhängig ist, wobei der Parameter P einer der Parameter des Satzes $\theta_v$ ist, der die Parameter der parametrischen Vibration sowie b und B umfasst, und dadurch, dass es ferner die folgenden Schritte beinhaltet:

   - Ermitteln von Intervallen für jeden der Parameter des Satzes $\theta_v$;
   - Berechnen des Satzes $\theta_v$ von Parametern mit der höchsten Wahrscheinlichkeit in Abhängigkeit von dem Signal s(t), das von der Empfangsvorrichtung bereitgestellt wird und zu den Zeiten $t_1, ...t_n$ abgetastet wurde, wobei die Parameter in ihren jeweiligen Intervallen genommen werden;
   - Extrahieren des benötigten Parameters P aus diesem Satz.

2. Verfahren zum Ermitteln eines mit der parametrischen Vibration eines Objekts assoziierten Parameters P nach Anspruch 1, **dadurch gekennzeichnet, dass** das Intervall für b den Wert 0 umfasst.

3. Verfahren zum Ermitteln eines mit der parametrischen Vibration eines Objekts assoziierten Parameters P nach einem der vorherigen Ansprüche, **dadurch gekennzeichnet, dass** die Parameter der parametrischen Vibration ihre Frequenz, ihre Amplitude und ihre Phase sind.

4. Verfahren zum Ermitteln eines mit der parametrischen Vibration eines Objekts assoziierten Parameters P nach dem vorherigen Anspruch, **dadurch gekennzeichnet, dass** die parametrische Vibration sinusförmig ist.

5. Verfahren zum Ermitteln eines mit der parametrischen Vibration eines Objekts assoziierten Parameters P nach einem der vorherigen Ansprüche, **dadurch gekennzeichnet, dass** die Berechnung des Satzes $\theta_v$ mit der höchsten Wahrscheinlichkeit auf einer Berechnung der Summe der Quadrate der Reste oder auf einer Wahrscheinlichkeitsberechnung beruht.

6. Verfahren zum Ermitteln eines mit der parametrischen Vibration eines Objekts assoziierten Parameters P nach einem der vorherigen Ansprüche, **dadurch gekennzeichnet, dass** die Berechnung des Satzes $\theta_v$ mit der höchsten Wahrscheinlichkeit einen linearen Filterschritt beinhaltet.

7. Verfahren zum Ermitteln eines mit der parametrischen Vibration eines Objekts assoziierten Parameters P nach dem vorherigen Anspruch, **dadurch gekennzeichnet, dass** die Filterung Kalman-Filterung ist.

8. Verfahren zum Ermitteln eines mit der parametrischen Vibration eines Objekts assoziierten Parameters P nach einem der vorherigen Ansprüche, **dadurch gekennzeichnet, dass** die Rauheit eine Korrelationslänge von weniger als einem Zehntel der Größe des beleuchteten Teils des Objekts hat.

9. Verfahren zum Ermitteln eines mit der parametrischen Vibration eines Objekts assoziierten Parameters P nach einem der vorherigen Ansprüche, **dadurch gekennzeichnet, dass** der Schritt des Ermittelns des Intervalls von B einen vorhergehenden Schritt des Schätzens von B beinhaltet, wobei das Intervall von B dann auf den geschätzten Wert reduziert wird.

10. Verfahren zum Ermitteln eines mit der parametrischen Vibration eines Objekts assoziierten Parameters P nach einem der vorherigen Ansprüche, **dadurch gekennzeichnet, dass** die Doppler-Frequenz $f_d$ des Objekts ein zusätzlicher Parameter des Satzes $\theta 8_v$ ist.

11. Verfahren zum Ermitteln eines mit der parametrischen Vibration eines Objekts assoziierten Parameters P, **dadurch gekennzeichnet, dass**, wenn dieser Parameter die Amplitude oder die Frequenz oder die Phase der parametrischen Vibration ist, es einen Schritt des Ermittelns des Parameters P nach einem der vorherigen Ansprüche in Kombination mit Anspruch 2, einen Schritt des parametrischen Schätzens des Parameters P des Objekts unter der Annahme, dass das Objekt keine andere Bewegung als parametrische Vibration hat, und einen Schritt des Vergleichens der in diesen beiden Schritten erhaltenen Ergebnisse beinhaltet.

12. Verfahren zum Ermitteln eines mit der parametrischen Vibration eines Objekts assoziierten Parameters P nach einem der vorherigen Ansprüche, **dadurch gekennzeichnet, dass** das Objekt ein Luftfahrzeug oder ein Landfahrzeug oder ein Schiff ist.

13. System zum Ermitteln eines mit der parametrischen Vibration eines Objekts assoziierten Parameters P, **dadurch gekennzeichnet, dass** es eine Vorrichtung (1) zum Senden eines Lasersignals zu dem Objekt, eine Vorrichtung (5) zum Empfangen des von dem Objekt reflektierten Signals, eine Einheit (6) zum Verarbeiten des von der Empfangsvorrichtung bereitgestellten Signals umfasst, ausgelegt zum Ausführen des Verfahrens nach einem der vorherigen Ansprüche.

**Claims**

1. A method for determining a parameter P associated with the parametric vibration of an object with non-zero roughness by means of a device for transmitting a laser signal toward said object and a device for receiving the signal reflected by said object, **characterised in that** it comprises the following steps:

   - illuminating said object by a continuous or quasi-continuous signal transmitted by said transmission device, with a quasi-continuous signal being a signal obtained by an "all-or-nothing" amplitude modulation of a continuous signal;
   - demodulating the received signal, via said receiving device, by means of the transmitted signal, and a signal in quadrature with said transmitted signal,

   and **in that** said object is moving and/or **in that** atmospheric disruptions are on the path of the transmitted signal and/or of the reflected signal, said received signal then comprising a multiplicative noise component generated by these atmospheric disruptions and/or by the movement of said object, with this multiplicative noise depending on a width parameter b of its spectrum, and on a normalisation parameter B of the multiplicative noise, said parameter P being one of the parameters of the set $\theta_v$ that comprises the parameters of the parametric vibration, as well as b and B, and **in that** it further comprises the following steps:

   - determining intervals for each of the parameters of the set $\theta_v$;
   - calculating the set $\theta_v$ of parameters with the highest likelihood as a function of the signal s(t) provided by said receiving device and sampled at instants $t_1$, ...$t_n$, said parameters being taken in their respective intervals;
   - extracting the required parameter P from this set.

2. The method for determining a parameter P associated with the parametric vibration of an object according to claim 1, **characterised in that** the interval for b comprises the value 0.

3. The method for determining a parameter P associated with the parametric vibration of an object according to any one of the preceding claims, **characterised in that** the parameters of the parametric vibration are its frequency, its amplitude and its phase.

4. The method for determining a parameter P associated with the parametric vibration of an object according to the preceding claim, **characterised in that** the parametric vibration is sinusoidal.

5. The method for determining a parameter P associated with the parametric vibration of an object according to any one of the preceding claims, **characterised in that** the calculation of the set $\theta_v$ with the highest likelihood is based on a calculation of the sum of the squares of the residues or on a likelihood calculation.

6. The method for determining a parameter P associated with the parametric vibration of an object according to any one of the preceding claims, **characterised in that** the calculation of the set $\theta_v$ with the highest likelihood comprises a linear filtering step.

7. The method for determining a parameter P associated with the parametric vibration of an object according to the preceding claim, **characterised in that** the filtering is Kalman filtering.

8. The method for determining a parameter P associated with the parametric vibration of an object according to any one of the preceding claims, **characterised in that** the roughness has a correlation length of less than one tenth of the size of the illuminated part of said object.

9. The method for determining a parameter P associated with the parametric vibration of an object according to any one of the preceding claims, **characterised in that** the step of determining the interval of B comprises a preliminary step of estimating B, with the interval of B then being reduced to the estimated value.

10. The method for determining a parameter P associated with the parametric vibration of an object according to any one of the preceding claims, **characterised in that** the Doppler frequency $f_d$ of the object is an additional parameter of the set $\theta_v$.

11. The method for determining a parameter P associated with the parametric vibration of an object, **characterised in that**, with this parameter being the amplitude or the frequency or the phase of the parametric vibration, it comprises a step of determining the parameter P according to any one of the preceding claims in combination with claim 2, a step of parametric estimating of the parameter P of said object assuming that said object has no other movement than parametric vibration and a step of comparing results obtained according to said two steps.

12. The method for determining a parameter P associated with the parametric vibration of an object according to any one of the preceding claims, **characterised in that** said object is an aircraft or a land vehicle or a maritime vessel.

13. A system for determining a parameter P associated with the parametric vibration of an object, **characterised in that** it comprises a device (1) for transmitting a laser signal toward said object, a device (5) for receiving the signal reflected by said object, a unit (6) for processing the signal provided by said receiving device, designed to implement the method according to any one of the preceding claims.

Onde propagée
dans l'air ou le vide

Laser cohérent ⎯1

Oscillateur local

2

3

π/2

Signal reçu

Partie réelle de s(t)

6

4

s(t)

Unité de
traitement

θ_v le plus
vraisemblable

Onde
réfléchie par
l'objet

Partie imaginaire
de s(t)

5

# FIG.1

Objet rugueux

x=0

r(x)

x

θ'x = vitesse du point d'abscisse x

Onde laser incidente

# FIG.2

θ$_v$

Signal
à traiter s(t)

Calcul de
vraisemblance

Recherche du θ$_v$ le
plus vraisemblable

θ$_v$ le plus
vraisemblable

6

# FIG.3

mesures x$_1$ ... x$_n$

hypothèse θ$_v$

Filtre de Kalman : calcul
des résidus et de leurs
variances

S= somme
des carrés
des résidus
normalisés

S fonction
de θ$_v$

# FIG.4

**EP 2 494 374 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005030520 A

**Littérature non-brevet citée dans la description**

- **I. RENHORN.** Coherent laser radar for vibrometry : Robust design and adaptive signal processing. *SPIE 2472,* 1995, 23-30
- **CÉLINE LÉVY-LEDUC.** *Estimation semi-paramétrique de la période de fonctions périodiques inconnues dans divers modèles statistiques : théorie et applications,* 18 Novembre 2004
- **WILLIAM A. GARDNER.** Cyclostationarity in Communications and Signal Processing. IEEE Press, 1994
- Time Series: Theory and Methods. **RICHARD A. BROCKWELL ; PETER J. DAVIS.** Springer Series in Statistics. Springer, 1991
- **PATRICK DUVAUT.** Traitement du Signal concepts et applications. *Traité des Nouvelles Technologies, Série Traitement du Signal,* 1991